# EUROPEAN PATENT APPLICATION

(11) **EP 4 807 115 A1**
(43) Date of publication of application: **16.09.2026**
(21) Application number: 26164236.7
(22) Date of filing: 12.03.2026
(51) Int. Cl.: E05B 81/66, E05B 83/34, B60L 53/16, H01R 13/70

(54) **ELECTRONIC LOCK**

(30) Priority: 13.03.2025 CN 202510297041
(71) Applicant: Tyco Electronics (Shanghai) Co., Ltd., Pilot Free Trade Zone Shanghai 200131 (CN); Tyco Electronics Technology (SIP) Ltd., Suzhou 215026 (CN)
(72) Inventor: Wen, Xianwen, Suzhou, 32 215123 (CN); Wu, Super, Suzhou, 32 215123 (CN); Zhu, Fangyue, Shanghai, 200233 (CN)
(74) Representative: Grünecker Patent- und Rechtsanwälte PartG mbB

(57) **Abstract**

The present invention discloses an electronic lock comprising a first housing and a second housing. The first housing is provided with a lock hole thereon, and a lock rod of the electronic lock extends out of the first housing through the lock hole. The electronic lock further comprises an electric circuit for transmitting a switch signal of the electronic lock, wherein the electric circuit includes a pair of lock hole terminals disposed on the lock hole, and an electrical connector is arranged on the lock rod. The electrical connector contacts the lock hole terminals on the lock hole when the lock rod is located in a locked position, thereby connecting the electric circuit electrically and transmitting the switch signal. The electrical connector is kept away from the lock hole terminals on the lock hole when the lock rod is located in an unlocked position, thereby disconnecting the electric circuit electrically. The electronic lock according to the present invention may save an internal space of the electronic lock, reduce the volume of the lock body, facilitate the assembly of components, eliminate the need to purchase external parts, and save costs.

## Description

### CROSS-REFERENCE TO RELATED APPLICATION

The present disclosure claims the priority of Chinese Application No. 202510297041.X filed on March 13, 2025. and entitled "Electronic Lock", the whole disclosure of which is incorporated herein by reference.

### TECHNICAL FIELD

The present invention relates to an electronic lock for a charging dock of an electric vehicle, and in particular, to an electronic lock with an improved switch signal circuit.

### BACKGROUND

Electronic locks are key components of European standard AC charging docks. During the vehicle charging process with a plug-in gun, the electronic lock functions to lock a head of the gun and feed a switch signal back to the vehicle, which indicates that the gun has been locked. In current electronic locks available on the market, a structure in which a microswitch is soldered to a printed circuit board (PCB) is configured to output the switch signal. However, the arrangement of the microswitch and the PCB occupies a relatively large space inside the electronic lock and incurs high costs.

### SUMMARY

To overcome the above-mentioned or other defects in the prior art, the present invention proposes an electronic lock for an electric vehicle. The electronic lock has an improved switch signal circuit.

According to one aspect of the present invention, there is provided an electronic lock comprising a first housing and a second housing, the first housing is provided with a lock hole, and a lock rod of the electronic lock extends out of the first housing through the lock hole, the electronic lock further comprises an electric circuit for transmitting a switch signal of the electronic lock, wherein the electric circuit comprises a pair of lock hole terminals disposed on the lock hole, and an electrical connector is disposed on the lock rod, the electrical connector contacts the lock hole terminals on the lock hole when the lock rod is located in a locked position, thereby connecting the electric circuit electrically, the electrical connector is located away from the lock hole terminals on the lock hole when the lock rod is located in an unlocked position, thereby disconnecting the electric circuit electrically.

According to an exemplary embodiment, the lock hole comprises a guiding flange on an inner side of the first housing, the electrical connector of the lock rod is opposite to an inner wall of the guiding flange of the lock hole when the lock rod is located in the locked position, and the pair of lock hole terminals are respectively molded on the inner wall of the guiding flange opposite to each other.

According to an exemplary embodiment, the electrical connector is a conductive integral component, comprising a fixing portion and a pair of opposing protruding portions, the fixing portion fixes the electrical connector on the lock rod, and the pair of protruding portions are elastic pieces protruding in an arc shape toward a periphery of the lock rod, the pair of protruding portions abut against the pair of lock hole terminals on the inner wall of the guiding flange respectively when the lock rod is located in the locked position.

According to an exemplary embodiment, the fixing portion of the electrical connector is a conductive collar sleeved on the periphery of the lock rod.

According to an exemplary embodiment, the lock rod is made of a conductive material, and an insulating member is disposed between the fixing portion of the electrical connector and the lock rod.

According to an exemplary embodiment, one end of the lock rod is further provided with a non-conductive base, and the fixing portion of the electrical connector is disposed between the lock rod and the base, wherein a non-conductive collar is disposed between the fixing portion and the lock rod.

According to an exemplary embodiment, the guiding flange is configured to surround a periphery of the lock hole, wherein the lock rod is spaced apart from the guiding flange.

According to an exemplary embodiment, the periphery of the lock rod comprises an annular groove, and the fixing portion of the electrical connector is sleeved in the groove.

According to an exemplary embodiment, the electric circuit is disposed on an inner wall of the first housing, and the electronic lock further comprises a signal output portion disposed outside the second housing, the signal output portion is electrically connected to the electric circuit of the first housing to output the switch signal when the first housing and the second housing are assembled together.

According to an exemplary embodiment, a pair of first terminals are disposed on the inner wall of the first housing, and the pair of first terminals are electrically connected to the electric circuit, the pair of first terminals protrude from the inner wall of the first housing toward the second housing, a pair of second terminals are disposed inside the second housing, and the pair of second terminals are electrically connected to the signal output portion, the pair of second terminals protrude from an inner wall of the second housing toward the first housing, the first terminals contact the second terminals when the first housing and the second housing are assembled together, thereby realizing the electrical connection between the signal output portion and the electric circuit.

According to an exemplary embodiment, a free end of each of the second terminals of the second housing is provided with a clamping groove, the pair of first terminals of the first housing are respectively inserted into and clamped by the clamping grooves of the pair of second terminals of the second housing when the first housing and the second housing are assembled together.

According to an exemplary embodiment, a fixed end of each of the first terminals of the first housing is molded in the inner wall of the first housing, and a fixed end of each of the second terminals of the second housing is molded in the inner wall of the second housing.

According to an exemplary embodiment, both the first housing and the second housing are made of a non-conductive material, and the electric circuit of the first housing is molded in the inner wall of the first housing.

In each of the foregoing exemplary embodiments of the present invention, the advantages of the present invention are detailed as follows: the electronic lock according to the present invention has an improved switch signal circuit, on one hand, an upper housing and a lower housing of the electronic lock form an electric circuit through mated molded terminals, which saves an internal space of the electronic lock and allows a lock body of the electronic lock to be made as small as possible; on the other hand, the electric circuit between the upper and lower housings of the electronic lock is connected electrically through terminal mating, enabling simple assembly without the need for special welding or screw positioning processes; in addition, elastic pieces on the lock rod connect or disconnect the electric circuit electrically so as to trigger the switch signal of the electronic lock, eliminating the need to purchase electronic components such as microswitches and PCBs, thereby saving costs.

### BRIEF DESCRIPTION OF THE DRAWINGS

Other objects and advantages of the present invention will become apparent through the following description of the present invention with reference to the accompanying drawings, which will also help to provide a comprehensive understanding of the present invention.
Fig. 1 shows a perspective view of an interior of a first housing of an electronic lock according to an exemplary embodiment of the present invention;
Fig. 2 shows a perspective view of an interior of a second housing of the electronic lock according to an exemplary embodiment of the present invention;
Fig. 3 shows a cross-sectional view of the electronic lock in a locked state according to an exemplary embodiment of the present invention, illustrating details of the interaction between a guiding flange of the first housing and an electrical connector of a lock rod of the electronic lock, as well as the connection between terminals of the first housing and the second housing;
Fig. 4 shows a perspective view of the lock rod according to an exemplary embodiment of the present invention, illustrating details of the electrical connector of the lock rod; and
Fig. 5 shows a perspective view of an electric circuit of the electronic lock according to an exemplary embodiment of the present invention.

The accompanying drawings are for illustrative purposes only and do not limit the scope of the present invention. The dimensions and proportions in the drawings are not drawn to scale.

### DETAILED DESCRIPTION OF EMBODIMENTS

The technical solutions of the present invention will be further specifically described below through embodiments and with reference to the accompanying drawings. In the specification, the same or similar reference numerals indicate the same or similar components. The following description of the embodiments of the present invention with reference to the accompanying drawings is intended to explain the general inventive concept of the present invention and should not be construed as a limitation to the present invention.

In addition, in the following detailed description, for the purpose of explanation, numerous specific details are set forth to provide a comprehensive understanding of the disclosed embodiments. However, it is obvious that one or more embodiments may be implemented without these specific details. In other cases, well-known structures and devices are shown in schematic form to simplify the drawings.

According to a general technical concept of the present invention, there is provided an electronic lock comprising a first housing and a second housing. The first housing is provided with a lock hole, and a lock rod of the electronic lock extends out of the first housing through the lock hole. The electronic lock further comprises an electric circuit for transmitting a switch signal of the electronic lock, wherein the electric circuit comprises a pair of lock hole terminals disposed on the lock hole, and an electrical connector is disposed on the lock rod. The electrical connector contacts the lock hole terminals on the lock hole when the lock rod is located in a locked position, thereby connecting the electric circuit electrically. The electrical connector is located away from the lock hole terminals on the lock hole when the lock rod is located in an unlocked position, thereby disconnecting the electric circuit electrically.

The electronic lock according to the present invention has an improved switch signal circuit. On one hand, an upper housing and a lower housing of the electronic lock form an electric circuit through mated molded terminals, which saves an internal space of the electronic lock and allows a lock body of the electronic lock to be made as small as possible. On the other hand, the electric circuit between the upper and lower housings of the electronic lock is connected electrically through terminal mating, enabling simple assembly without the need for special welding or screw positioning processes. In addition, elastic pieces on the lock rod connect or disconnect the electric circuit electrically so as to trigger the switch signal of the electronic lock, eliminating the need to purchase electronic components such as microswitches and PCBs, thereby saving costs.

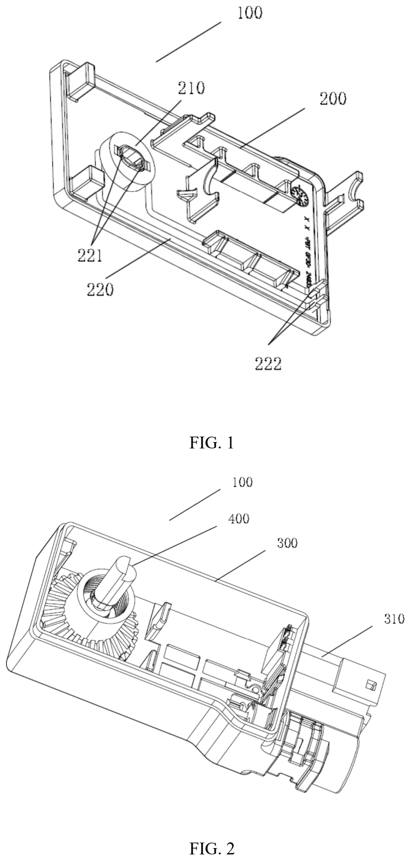

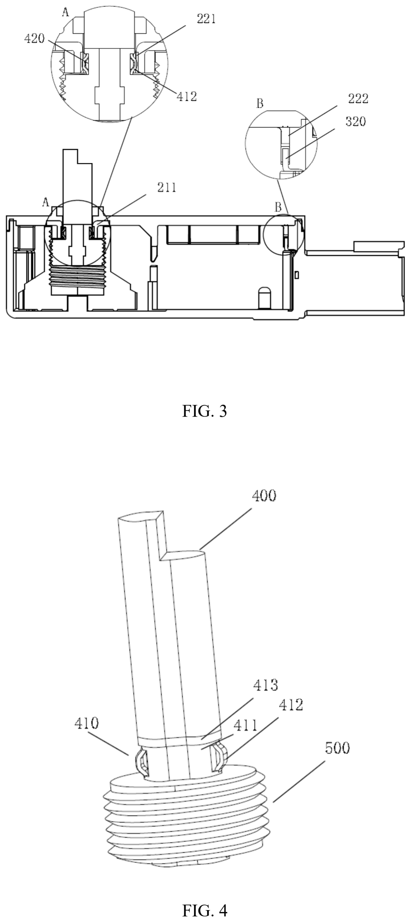

Fig. 1 shows a perspective view of an interior of a first housing 200 of an electronic lock 100 according to an exemplary embodiment of the present invention; Fig. 2 shows a perspective view of an interior of a second housing 300 of the electronic lock 100 according to an exemplary embodiment of the present invention; Fig. 3 shows a cross-sectional view of the electronic lock 100 in a locked state according to an exemplary embodiment of the present invention, illustrating details of the interaction between a guiding flange 211 of the first housing 200 and an electrical connector 410 of a lock rod 400 of the electronic lock 100, as well as the connection between terminals of the first housing 200 and the second housing 300.

As shown in the Figures, the electronic lock 100 according to the present invention comprises a first housing 200 and a second housing 300. The first housing 200 is provided with a lock hole 210 thereon, and a lock rod 400 of the electronic lock 100 extends out of the first housing 200 through the lock hole 210. An electric circuit 220 for transmitting a switch signal of the electronic lock 100 is disposed on an inner wall of the first housing 200, wherein the electric circuit 220 comprises a pair of lock hole terminals 221 disposed on the lock hole 210, and an electrical connector 410 is disposed on the lock rod 400. The electrical connector 410 contacts the lock hole terminals 221 on the lock hole 210 when the lock rod 400 is located in a locked position, thereby connecting the electric circuit 220 electrically. The electrical connector 410 is located away from the lock hole terminals 221 on the lock hole 210 and is staggered from the lock hole terminals 221 on the lock hole 210 when the lock rod 400 is located in an unlocked position, thereby disconnecting the electric circuit 220 electrically. Therefore, an extension of the lock rod 400 electrically connects the electric circuit 220 inside the first housing 200, and a retraction of the lock rod 400 electrically disconnects the electric circuit 220 inside the first housing 200, generating a switch signal in the electric circuit 220 that characterizes locked and unlocked states of the electronic lock 100 respectively.

As shown in Fig. 3, the lock hole 210 comprises a guiding flange 211 on an inner side of the first housing 200. The electrical connector 410 disposed at a root of the lock rod 400 is opposite to an inner wall of the guiding flange 211 of the lock hole 210 when the lock rod 400 is located in the locked position, and the pair of lock hole terminals 221 are respectively molded on the inner wall of the guiding flange 211 opposite to each other. The electrical connector 410 is disposed at the root of the lock rod 400, wherein the electrical connector 410 is a conductive integral component, which may be made of metal, for example, comprising a fixing portion 411 and a pair of opposing protruding portions 412. The fixing portion 411 fixes the electrical connector 410 on the lock rod 400, and the pair of protruding portions 412 are elastic pieces protruding in an arc shape toward a periphery of the lock rod 400. When the lock rod 400 is located in the locked position, the pair of protruding portions 412 abut against the pair of lock hole terminals 221 on the inner wall of the guiding flange 211 respectively.

According to an exemplary embodiment, the guiding flange 211 is configured to surround a periphery of the lock hole 210, wherein the lock rod 400 is spaced apart from the guiding flange 211.

Fig. 4 shows a perspective view of the lock rod 400 of the electronic lock 100 according to an exemplary embodiment of the present invention, illustrating details of the electrical connector 410 of the lock rod 400.

As shown in Fig. 4, the fixing portion 411 of the electrical connector 410 is a conductive collar sleeved on a periphery of the root of the lock rod 400.

According to an exemplary embodiment, the lock rod 400 is made of a conductive material, such as metal, and an insulating member 413 is disposed between the fixing portion 411 of the electrical connector 410 and the lock rod 400.

As shown in Fig. 4, the root of the lock rod 400 is further provided with a base 500 made of a non-conductive material, such as plastic. The fixing portion 411 of the electrical connector 410 is disposed between the lock rod 400 and the base 500, wherein a non-conductive collar is disposed between the fixing portion 411 and the lock rod 400.

According to an exemplary embodiment, as shown in Fig. 3, the periphery of the root of the lock rod 400 comprises an annular groove 420, and the fixing portion 411 of the electrical connector 410 is sleeved in the groove 420.

It will be understood by those of ordinary skill in the art that the specific form of the electrical connector 410 is not limited to the above-described form, but various modifications may be made. The form of the protruding portions of the electrical connector 410 may also be various. For example, through holes may be provided at corresponding positions of the metal conductive collar of the electrical connector 410. The lock hole terminals 221 respectively contact the conductive portion of the conductive collar or are opposite to the through holes without contacting the conductive collar when the lock rod 400 is located in the locked position or the unlocked position, thereby enabling the connection or disconnection of the electric circuit between the lock hole terminals and the electrical connector 410.

In addition, the lock rod 400 may also be made of a non-conductive material, and a conductive coating may be provided on the periphery of the lock rod 400 instead of the metal electrical connector 410, which may reduce the number of components. In this case, the lock hole terminals may be configured to protrude toward the lock rod so as to be in electrical contact with the conductive coating while being able to clamp the electrical connector on the lock rod.

As shown in Fig. 2, the electronic lock 100 further comprises a signal output portion 310 disposed outside the second housing 300. The signal output portion 310 is electrically connected to the electric circuit 220 of the first housing 200 to output the switch signal when the first housing 200 and the second housing 300 are assembled together.

As shown in Fig. 1, a pair of first terminals 222 are disposed on the inner wall of the first housing 200, and the pair of first terminals 222 are electrically connected to the electric circuit 220. The pair of first terminals 222 protrude from the inner wall of the first housing 200 toward the second housing 300. A pair of second terminals 320 are disposed inside the second housing 300, and the pair of second terminals 320 are electrically connected to the signal output portion 310. The pair of second terminals 320 protrude from an inner wall of the second housing 300 toward the first housing 200. The first terminals 222 contact the second terminals 320 when the first housing 200 and the second housing 300 are assembled together, thereby realizing the electrical connection between the signal output portion 310 and the electric circuit 220.

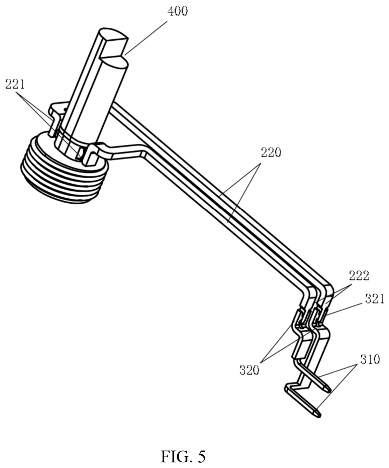

Fig. 5 shows a perspective view of the electric circuit 220 of the electronic lock 100 according to an exemplary embodiment of the present invention.

As shown in Fig. 5, a free end of each of the second terminals 320 of the second housing 300 is provided with a clamping groove 321. The pair of first terminals 222 of the first housing 200 are respectively inserted into and clamped by the clamping grooves 321 of the pair of second terminals 320 of the second housing 300 when the first housing 200 and the second housing 300 are assembled together.

A fixed end of each of the first terminals 222 of the first housing 200 is molded in the inner wall of the first housing 200, and a fixed end of each of the second terminals 320 of the second housing 300 is molded in the inner wall of the second housing 300.

The first housing 200 and the second housing 300 are both made of a non-conductive material, such as plastic, and the electric circuit 220 of the first housing 200 is molded in the inner wall of the first housing 200.

The electronic lock according to the present invention has an improved switch signal circuit. On one hand, an upper housing and a lower housing of the electronic lock form an electric circuit through mated molded terminals, which saves an internal space of the electronic lock and allows a lock body of the electronic lock to be made as small as possible. On the other hand, the electric circuit between the upper and lower housings of the electronic lock is connected electrically through terminal mating, enabling simple assembly without the need for special welding or screw positioning processes. In addition, elastic pieces on the lock rod connect or disconnect the electric circuit electrically so as to trigger the switch signal of the electronic lock, eliminating the need to purchase electronic components such as microswitches and PCBs, thereby saving costs.

Those skilled in the art may understand that the embodiments described above are all exemplary, and those skilled in the art may improve them, and the structures described in the various embodiments may be combined without any conflicts in terms of structure or principle.

Although the present invention has been described with reference to the accompanying drawings, the embodiments disclosed in the accompanying drawings are intended to exemplify the preferred embodiments of the present invention, and should not be understood as a limitation to the present invention.

Although some embodiments of the present general inventive concept have been illustrated and described, those ordinary skilled in the art will understand that modifications may be made to these embodiments without departing from the principle and spirit of the present general inventive concept. The scope of the present invention is defined by the claims and their equivalents.

It should be noted that the word "comprise" does not exclude other elements or steps, and the word "a" or "an" does not exclude a plurality. In addition, any element reference signs in the claims should not be construed as limiting the scope of the present invention.

## Claims

1. An electronic lock (100), comprising a first housing (200) and a second housing (300), wherein the first housing (200) is provided with a lock hole (210), a lock rod (400) of the electronic lock (100) extends out of the first housing (200) through the lock hole (210), the electronic lock (100) further comprises an electric circuit (220) for transmitting a switch signal of the electronic lock (100), the electric circuit (220) comprises a pair of lock hole terminals (221) disposed on the lock hole (210), an electrical connector (410) is disposed on the lock rod (400), the electrical connector (410) contacts the lock hole terminals (221) on the lock hole (210) when the lock rod (400) is located in a locked position, thereby connecting the electric circuit (220) electrically, and the electrical connector (410) is located away from the lock hole terminals (221) on the lock hole (210) when the lock rod (400) is located in an unlocked position, thereby disconnecting the electric circuit (220) electrically.

2. The electronic lock (100) according to claim 1, wherein the lock hole (210) comprises a guiding flange (211) on an inner side of the first housing (200), the electrical connector (410) of the lock rod (400) is opposite to an inner wall of the guiding flange (211) of the lock hole (210) when the lock rod (400) is located in the locked position, and the pair of lock hole terminals (221) are respectively molded on the inner wall of the guiding flange (211) opposite to each other.

3. The electronic lock (100) according to claim 2, wherein the electrical connector (410) is a conductive integral component, comprising a fixing portion (411) and a pair of opposing protruding portions (412), the fixing portion (411) fixes the electrical connector (410) on the lock rod (400), the pair of protruding portions (412) are elastic pieces protruding in an arc shape toward a periphery of the lock rod (400), and the pair of protruding portions (412) abut against the pair of lock hole terminals (221) on the inner wall of the guiding flange (211) respectively when the lock rod (400) is located in the locked position.

4. The electronic lock (100) according to claim 3, wherein the fixing portion (411) of the electrical connector (410) is a conductive collar sleeved on the periphery of the lock rod (400).

5. The electronic lock (100) according to claim 4, wherein the lock rod (400) is made of a conductive material, and an insulating member (413) is disposed between the fixing portion (411) of the electrical connector (410) and the lock rod (400).

6. The electronic lock (100) according to claim 5, wherein one end of the lock rod (400) is further provided with a non-conductive base (500), the fixing portion (411) of the electrical connector (410) is disposed between the lock rod (400) and the base (500), and a non-conductive collar is disposed between the fixing portion (411) and the lock rod (400).

7. The electronic lock (100) according to any one of claims 2-6, wherein the guiding flange (211) is configured to surround a periphery of the lock hole (210), and the lock rod (400) is spaced apart from the guiding flange (211).

8. The electronic lock (100) according to any one of claims 3-6, wherein the periphery of the lock rod (400) comprises an annular groove (420), and the fixing portion (411) of the electrical connector (410) is sleeved in the groove (420).

9. The electronic lock (100) according to any one of claims 1-6, wherein the electric circuit (220) is disposed on an inner wall of the first housing (200), the electronic lock (100) further comprises a signal output portion (310) disposed outside the second housing (300), and the signal output portion (310) is electrically connected to the electric circuit (220) of the first housing (200) to output the switch signal when the first housing (200) and the second housing (300) are assembled together.

10. The electronic lock (100) according to claim 9, wherein a pair of first terminals (222) are disposed on the inner wall of the first housing (200), the pair of first terminals (222) are electrically connected to the electric circuit (220), the pair of first terminals (222) protrude from the inner wall of the first housing (200) toward the second housing (300), a pair of second terminals (320) are disposed inside the second housing (300), the pair of second terminals (320) are electrically connected to the signal output portion (310), the pair of second terminals (320) protrude from an inner wall of the second housing (300) toward the first housing (200), and the first terminals (222) contact the second terminals (320) when the first housing (200) and the second housing (300) are assembled together, thereby realizing the electrical connection between the signal output portion (310) and the electric circuit (220).

11. The electronic lock (100) according to claim 10, wherein a free end of each of the second terminals (320) of the second housing (300) is provided with a clamping groove (321), and the pair of first terminals (222) of the first housing (200) are respectively inserted into and clamped by the clamping grooves (321) of the pair of second terminals (320) of the second housing (300) when the first housing (200) and the second housing (300) are assembled together.

12. The electronic lock (100) according to claim 10, wherein a fixed end of each of the first terminals (222) of the first housing (200) is molded in the inner wall of the first housing (200), and a fixed end of each of the second terminals (320) of the second housing (300) is molded in the inner wall of the second housing (300).

13. The electronic lock (100) according to any one of claims 1-6, wherein both the first housing (200) and the second housing (300) are made of a non-conductive material, and the electric circuit (220) of the first housing (200) is molded in the inner wall of the first housing (200).
